# EUROPÄISCHE PATENTANMELDUNG

(11) **EP 0 553 416 A1**
(43) Veröffentlichungstag der Anmeldung: **04.08.1993**
(21) Anmeldenummer: 92119252.2
(22) Anmeldetag: 11.11.1992
(51) Int. Cl.: H04B 10/08

(54) **Verfahren und Anordnung zum Betrieb von optischen Verteilnetzen**

(30) Priorität: 30.01.1992 DE 4202843
(71) Anmelder: KRONE Aktiengesellschaft, D-14167 Berlin (DE)
(72) Erfinder: Leisner, Norbert, W-1000 Berlin 45 (DE); Belohoubek, Otto, W-1000 Berlin 33 (DE); Huynh, Hon, W-1000 Berlin 47 (DE)

(57) **Zusammenfassung**

Die Erfindung bezieht sich auf ein Verfahren und eine Anordnung zum Betrieb von optischen Verteilnetzen, wie z.B. Kabelfernsehen, Telefonnetz, in denen die modulierte Strahlung eines Lasers über den optischen Verteiler an mehrere Empfangsstellen mit optischen Empfängern gesendet wird und wobei die Empfangsstelle über die Überwachungsbaugruppe und über den Rückkanalsender mit der Sendestelle rückverbunden ist.

Um eine Unterbrechung der optischen Übertragungsstrecke zu Service- oder Meßzwecken an einem optischen Empfänger 6 zu ermöglichen, ohne die Abschaltung aller anderen von dem gemeinsamen optischen Verteiler 2 versorgten optischen Empfänger 6 zu bewirken, wird die Empfangsstelle 3 mit einer zusätzlichen Signalverbindung versehen. Über diese zusätzliche Signalverbindung (Steckplatz) wird, wenn Servicearbeiten am optischen Empfänger 6 erfolgen sollen, der Überwachungsbaugruppe 9 mittels der elektronischen Baugruppe 7 signalisiert, daß keine Störung vorliegt und die Übertragung nicht zu unterbrechen ist. Die Überwachungsbaugruppe 9 gibt diese Meldung über den Rückkanalsender 10 an die Sendestelle 1.

## Beschreibung

Die Erfindung bezieht sich auf ein Verfahren und auf eine Vorrichtung zum Betrieb von optischen Verteilnetzen, wie z.B. Kabelfernsehen, Telefonnetz, gemäß dem Oberbegriff des Patentanspruches 1.

Ein Verfahren und eine Anordnung zum Betrieb von optischen Verteilnetzen der gattungsgemäßen Art sind in den "Vorläufigen Technischen Lieferbedingungen" für ein "Optisches Breitband-Kommunikations-Verbindungslinien-System" der Deutschen Bundespost TELEKOM vom Dezember 1990 beschrieben. In optischen Verteilnetzen, z.B. für das Kabelfernsehen, wird die modulierte Strahlung eines Lasers mit einem optischen Verteiler an mehrere Empfangsstellen gesendet. Um Personen vor der Laserstrahlung zu schützen, wird das Vorhandensein der Strahlung an jeder Empfangsstelle durch eine Überwachungsbaugruppe kontrolliert. Wenn eine Unterbrechung der Sendestrecke, z.B. durch Kabelbeschädigung, über einen Rückkanal zur Sendestelle gemeldet wird, wird der Laser über eine Lasersicherheitsschaltung abgeschaltet oder in seiner Leistung auf ein definiertes Maß reduziert. Wenn eine optische Empfangsstelle zu Servicezwecken vom Verteilnetz getrennt werden muß, wird dieser Vorgang von der Überwachungsbaugruppe als Unterbrechung der Sendestrecke gewertet, und alle anderen Empfänger, die von der gemeinsamen Laser-Sendestelle versorgt werden, werden ebenfalls abgetrennt und die Übertragung wird für alle Empfänger unterbrochen.

Der Erfindung liegt von daher die Aufgabe zugrunde, das Verfahren und die Anordnung der gattungsgemäßen Art dahingehend zu verbessern, daß ohne Beeinträchtigung der Sicherheit im Verteilnetz die Unterbrechung der optischen Übertragungsstrecke zu Service- oder Meßzwecken an einem optischen Empfänger nicht zur Abschaltung aller anderen von dem gemeinsamen optischen Verteiler versorgten optischen Empfänger führt.

Zur Lösung dieser Aufgabe sieht die Erfindung vor, daß in jeder Empfangsstelle eine zusätzliche Signalverbindung zur Überwachungsbaugruppe geschaffen wird, daß über diese Signalverbindung mittels einer steckbaren elektronischen Baugruppe im Bedarfsfall, also z.B. für Service- oder Meßzwecke, ein codiertes Signal eingegeben wird, über das der Überwachungsbaugruppe signalisiert wird, daß der optische Empfänger nicht gestört, sondern nur zu Servicezwecken überbrückt ist, und daß die Übertragung auf alle anderen an die Sendestelle angeschlossenen optischen Empfänger nicht unterbrochen werden muß. Die Überwachungsbaugruppe veranlaßt über den Rückkanalsender eine entsprechende Meldung an die Sendestelle. Wenn die optische Übertragungsstrecke unterbrochen wird, ohne daß über die zusätzliche Signalverbindung das codierte Signal eingegeben wurde, dann wird die Überwachungsbaugruppe diese Unterbrechung als Störung zur Sendestelle melden und die Abschaltung des Lasers oder dessen reduzierte Sendeleistung auslösen. Somit ist das Verteilnetz gegen den unbefugten Eingriff sicher, ohne daß bei Servicearbeiten an einer Empfangsstelle alle anderen Empfangsstellen gestört bzw. abgeschaltet werden.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispieles eines optischen Verteilnetzes näher erläutert. Es zeigen:
- Fig. 1: eine schematische Darstellung eines Verteilnetzes und
- Fig. 2: eine schematische Darstellung der Empfangsstelle des Verteilnetzes nach Fig. 1.

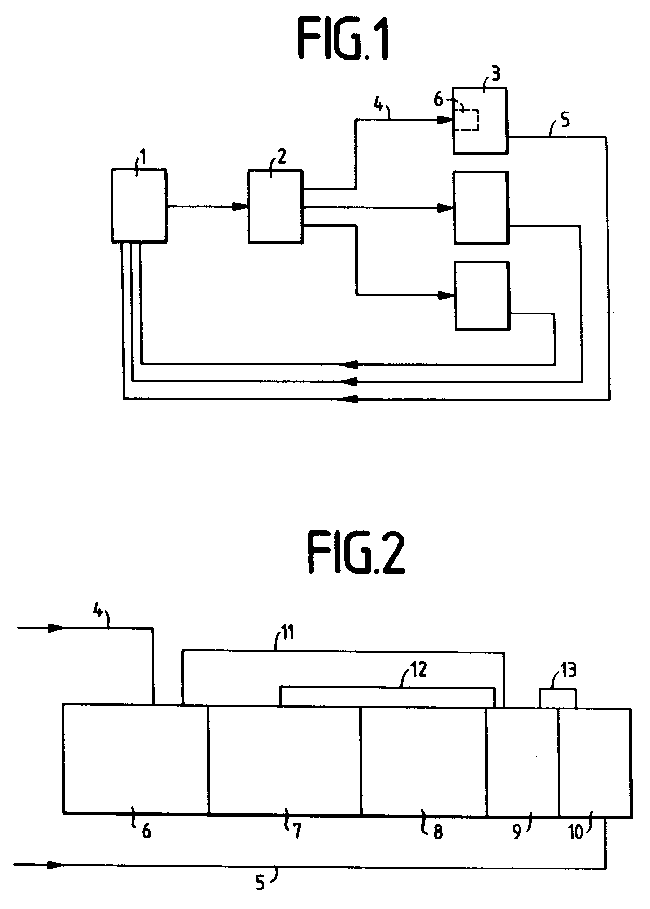

Die Fig. 1 zeigt den prinzipiellen Aufbau eines optischen Verteilnetzes, bestehend aus einer Sendestelle 1 mit Laser und Rückkanalempfänger und aus einem optischen Verteiler 2, von dem 1...n Empfangsstellen 3, hier drei Empfangsstellen 3, abzweigen, die über Glasfaser-Signalleitungen 4 mit dem optischen Verteiler 2 verbunden sind. Die Empfangsstellen 3 können z.B. die Mietparteien eines Miethauses sein. Die einzelnen Empfangsstellen 3 sind über Rückkanalleitungen 5 mit der Sendestelle 1 verbunden.

Jede Empfangsstelle 3 besteht, wie es die Fig. 2 zeigt, aus einem optischen Empfänger 6, einer Überwachungsbaugruppe 9 und einem Rückkanalsender 10, der über die Rückkanalleitung 5 mit der Sendestelle 1 verbunden ist. Die einzelnen Buelemente des Verteilnetzes sind durch Glasfaser-Leitungen oder/ und Kupferkabel miteinander verbunden. Bei den üblichen 19-Zoll-Geräteausführungen besteht die Empfangsstelle 3 aus einem Gehäuse mit Steckplätzen für die elektronischen Baugruppen 6 bis 10, die untereinander über Stromversorgungs- und Signalleitungen verbunden sind. Neben dem Steckplatz für den optischen Empfänger 6 (Fig. 2), der einen nicht dargestellten optisch-elektrischen Wandler enthält, ist die als Steckplatz ausgebildete zusätzliche Signalverbindung für die elektronische Baugruppe 7 angeordnet, die in die abgehende Leitung 5 für Rückmeldungen und andere Dienste eingeschleift ist und die im Normalbetrieb frei ist. Im Normalbetrieb, d.h. ohne Eingriffe in die optische Übertragungsstrecke und bei freiem zusätzlichen Steckplatz, wird ein Signal über eine Signalleitung 11 (Fig. 2) an eine Überwachungsbaugruppe 9 und von dort über eine Signalleitung 13 und über den Rückkanalsender 10 und die Rückkanalleitung 5 an die Sendestelle 1 gesendet, welches die Ordnungsmäßigkeit der Übertragung bestätigt. Im Fehlerfall, also wenn im optischen Empfänger 6 kein Signal ankommt oder der optische Empfänger 6 nicht gesteckt ist, wird diese Fehlermeldung über die Signalleitung 11 an die Überwachungsbaugruppe 9 gegeben und über die Signalleitung 13 an den Rückkanalsender 10 ein Signal zur Abschaltung des Lasers in der Sendestelle 1 gegeben. Wenn der Service-Techniker, der über die Gefahren der Laserstrahlung unterwiesen ist, den freien zusätzlichen Steckplatz mit der elektronischen Baugruppe 7, die im Beispiel ein "elektronischer Schlüssel" ist, belegt, dann wird über die Codierung des "elektronischen Schlüssels" der Überwachungsbaugruppe 9 über die Leitung 12 signalisiert, daß der optische Empfänger 6 nicht gestört ist (z.B. durch einen Kabelbruch), sondern zu Servicezwecken durch eine autorisierte Person überbrückt ist und die Übertragung der Laserleistung daher nicht zu unterbrechen ist. Die Überwachungsbaugruppe 9 veranlaßt über die Leitung 13 und den Rückkanalsender 10 sowie die Rückkanalleitung 5 eine entsprechende Meldung an die Sendestelle 1. In der Sendestelle 1 erfolgt eine Protokollierung, unter anderem auch bezüglich der personenbezogenen "Schlüsselkennung". Der "elektronische Schlüssel" ist mit einem EPROM oder einem Codierschalter ausgestattet. Wenn die optische Übertragungsstrecke unterbrochen wird oder die Baugruppe mit dem optischen Empfänger 6 aus dem Gehäuse entfernt wird , ohne daß der "elektronische Schlüssel" vorher gesteckt wurde, dann wird dies von der Überwachungsbaugruppe 9 zur Sendestelle 1 gemeldet und die Abschaltung des Laser und/ oder der Notbetrieb mit reduzierter Sendeleistung ausgelöst. Der "elektronische Schlüssel" ist an gut sichtbarer Stelle, bei einer Einschubversion z.B. auf der Frontplatte, angebracht und mit dem Laserwarnschild und/oder einer batteriegeschützten Warnleuchte versehen, die automatisch in Betrieb gesetzt wird, wenn der "elektronische Schlüssel" in den zusätzlichen Steckplatz eingebracht wird. Dazu ist in der geräteinternen Verdrahtung eine Kurzschlußbrücke vorgesehen. Der "elektronische Schlüssel" ist außerdem mit einer mechanischen und/oder elektronischen Kennung versehen, um die persönliche Kennung des Inhabers überprüfen zu können.

In einer weiteren Ausführungsform ist der Steckplatz als V-24-Schnittstelle ausgeführt, so daß ein Personalcomputer oder ein Labtop angeschlossen werden kann, über den über eine Codewortabfrage die Überbrückung der Lasersicherheitsschaltung gesteuert wird. Warnhinweise und Verhaltensmaßregeln sind dann auf dem Bildschirm darstellbar.

### BEZUGSZEICHENLISTE

- 1: Sendestelle
- 2: optischer Verteiler
- 3: Empfangsstelle
- 4: Glasfaser-Signalleitung
- 5: Rückkanalleitung
- 6: optischer Empfänger
- 7: elektronische Baugruppe
- 8: sonstige Baugruppe
- 9: Überwachungsbaugruppe
- 10: Rückkanalsender
- 11: Signalleitung
- 12: Signalleitung
- 13: Signalleitung

## Patentansprüche

1. Verfahren zum Betrieb von optischen Verteilnetzen, in denen die modulierte Strahlung des Lasers einer Sendestelle über einen optischen Verteiler an mehrere optische Empfangsstellen gesendet wird und die Empfangsstellen über eine Überwachungsbaugruppe und über einen Rückkanalsender mit der Sendestelle rückverbunden werden,
**dadurch gekennzeichnet,**
daß in jeder Empfangsstelle (3) eine zusätzliche Signalverbindung zur Überwachungsbaugruppe (9) geschaffen wird, daß der Überwachungsbaugruppe (9) mittels einer elektronischen Baugruppe (7) über eine Signalleitung (12) signalisiert wird, daß bei einer auftretenden Störung der Übertragungsstrecke oder des optischen Empfängers (6) zwischen der Sendestelle (1) und den Empfangsstellen (3), die Übertragung nicht zu unterbrechen ist,
und daß über eine Signalleitung (13) und den Rückkanalsender (10) eine entsprechende Meldung über die Rückkanalleitung (5) an die Sendestelle (1) abgesendet wird.

2. Anordnung zur Durchführung des Verfahrens nach Anspruch 1, dadurch gekennzeichnet, daß die elektronische Baugruppe (7) ausgangsseitig über die Signalleitung (5) für Rückmeldungen und andere Dienste, an welche die Signalleitung (12) angeschaltet ist, mit der Überwachungsbaugruppe (9) verbunden ist, und daß die elektronische Baugruppe (7) Mittel zur Absendung von codierten Signalen über die Überwachungsbaugruppe (9), den Rückkanalsender (10) und die Rückkanalleitung (5) an die Sendestelle (1) enthält.

3. Anordnung nach Anspruch 2, dadurch gekennzeichnet, daß die elektronische Baugruppe (7) steckbar ist.

4. Anordnung nach den Ansprüchen 2 und 3, dadurch gekennzeichnet, daß die elektronische Baugruppe (7) ein codiertes Steckelement ist.

5. Anordnung nach den Ansprüchen 2 und 3, dadurch gekennzeichnet, daß die elektronische Baugruppe (7) ein elektronischer Rechner ist.
